# EUROPÄISCHE PATENTSCHRIFT

(11) **EP 1 982 773 B1**
(45) Veröffentlichungstag und Bekanntmachung des Hinweises auf die Patenterteilung: **23.02.2011**
(21) Anmeldenummer: 08102063.8
(22) Anmeldetag: 27.02.2008
(51) Int. Cl.: B07C 1/02, B65G 65/23, B65H 31/30

(54) **Vorrichtung und Verfahren zum Entladen eines Behälters**
Device and method for emptying a container
Dispositif et procédé de déchargement d'un récipient

(30) Priorität: 19.04.2007 DE 102007018634
(43) Veröffentlichungstag der Anmeldung: 22.10.2008
(73) Patentinhaber: SIEMENS AKTIENGESELLSCHAFT, 80333 München (DE)
(72) Erfinder: Enenkel, Peter, 78462, Konstanz (DE)

(56) Entgegenhaltungen:
- DE-A1- 10 211 785
- US-A- 4 744 715

## Beschreibung

Die Erfindung betrifft eine Vorrichtung und ein Verfahren zum Entladen eines Behälters.

Beispielsweise bei der Beförderung von Postsendungen tritt die Aufgabe auf, einen Gegenstand aus einem oben offenen Behälter zu entnehmen. Der Gegenstand ist beispielsweise ein Stapel Postsendungen. Diese Postsendungen sind z. B. Standard- oder Großbriefe oder auch Kataloge. Die Postsendungen befinden sich vor der Entnahme in einem nach oben offenen Behälter, in den sie z. B. nach dem Einliefern eingelegt werden. Bei einer Entnahme nach oben müsste die Gewichtskraft der Sendungen kompensiert werden, z. B. durch seitliche Begrenzungselemente. Die Postsendungen sollen aber bei der Entnahme aus dem Behälter nicht beschädigt werden, weswegen die Begrenzungselemente keinen zu großen Anpressdruck ausüben dürfen.

In US 4,744,715 wird eine Vorrichtung mit den Merkmalen des Oberbegriffs des Anspruchs 1 sowie ein Verfahren mit den Merkmalen des Oberbegriffs des Anspruchs 15 beschrieben. Der Gegenstand ist hier ein "wafer". Dieser Gegenstand befindet sich vor dem Entladen in einem Behälter ("box type carrier C1), dass der Gegenstand durch eine vertikale Entnahmeöffnung entnommen werden kann. Der Behälter ruht auf einer Auflagefläche ("carrier stage 10"), die drehbar gelagert ist, weil sie auf einer angetriebenen Hohlwelle gelagert ist. Vor dem Entladen wird der Gegenstand im Behälter durch zwei Rückhalteelemente ("wafer maintainers 20a, 20b") gehalten. Diese Rückhalteelemente sind drehbar auf einer Welle gelagert, die in die Hohlwelle der Auflagefläche geführt ist. Der Behälter wird um 90 Grad gekippt, so dass die Entnahmeöffnung nach unten zeigt. Die Rückhalteelemente verhindern, dass der Gegenstand aus dem Behälter fällt. Eine weiteres Auflageelement ("wafer holder 31" und "wafer supporter 33") wird unter den Gegenstand gefahren. Die beiden Rückhalteelemente werden entfernt, so dass der Gegenstand auf dem Auflageelement liegt. Der Behälter wird in seine Ausgangsposition geschwenkt.

In WO 98/23393 A1 wird beschrieben, wie ein mit Postsendungen gefüllter Behälter entleert wird. Der Behälter steht vor dem Entladen so, dass die Entnahmeöffnung nach oben zeigt und Postsendungen waagrecht auf zwei Schrägen im Behälter liegen. Ein Entnahme- und Übernahmekopf wird über dem Behälter positioniert. Dieser Kopf hat eine Komponente in Form eines L, dessen einer Schenkel an der Behälterwand anliegt. An dem anderen Schenkel sind Niederhalter befestigt, die den Stapel zusammendrücken. Der Kopf hebt den Behälter an und dreht ihn. Anschließend lässt sich der Behälter abheben und der Stapel kann weiterverarbeitet werden.

In DE 19905955 C1 werden ein Verfahren und eine Vorrichtung zum Entladen eines oben offenen Behälters, in dem sich Postsendungen befinden, beschrieben. In den nach oben offenen Behälter werden Haltestützen gefahren, die den Stapel Postsendungen einklemmen. Der Behälter wird um mehr als 90 Grad gedreht, wodurch ein Spalt zwischen dem Stapel und dem nunmehr nach oben zeigenden Behälterboden entsteht. Eine bewegliche Anschlagwand verhindert, dass die Postsendungen aus dem Behälter fallen. Eine Bodenplatte wird in diesen Spalt geschoben. Der Behälter wird zurückgedreht. Der Stapel lässt sich auf der Bodenplatte stehend aus dem Behälter entfernen.

EP 0716891 A1 offenbart eine Vorrichtung, um einen Stapel flacher Gegenstände in einen Behälter zu heben. Hierbei wird der Stapel ausgerichtet und anschließend von zwei Begrenzungselementen zusammengedrückt und angehoben. Ein Behälter wird unter den angehobenen Stapel gefahren, und der Stapel wird in den Behälter abgesenkt. Diese Verfahrensschritte lassen sich auch in umgekehrter Reihenfolge ausführen.

In EP 1437183 B1 wird eine Vorrichtung beschrieben, die eine Auflagevorrichtung zum Aufnehmen des gefüllten Behälters aufweist. Diese Auflagevorrichtung ist drehbar gelagert. Der Behälter lässt sich drehen, und die Postsendungen lassen sich aus dem gedrehten Behälter entnehmen.

Der Erfindung liegt die Aufgabe zugrunde, eine Vorrichtung mit den Merkmalen des Oberbegriffs des Anspruchs 1 sowie ein Verfahren mit den Merkmalen des Oberbegriffs des Anspruchs 15 bereitzustellen, durch welche die Entnehme eines Gegenstandes, insbesondere eines Stapels flacher Postsendungen, aus einem nach oben offenen Behälter erleichtert wird.

Die Aufgabe wird durch eine Vorrichtung mit den Merkmalen des Anspruchs 1 und ein Verfahren mit den Merkmalen des Anspruchs 15 gelöst. Vorteilhafte Ausgestaltungen sind in den Unteransprüchen angegeben.

Die Vorrichtung umfasst eine drehbar gelagerte Auflagefläche, ein ebenfalls drehbar gelagertes Rückhaltemittel und ein Synchronisierungsmittel. Die Auflagefläche ist um eine erste Drehachse drehbar gelagert, das Rückhaltemittel um eine zweite Drehachse. Das Synchronisierungsmittel synchronisiert eine Drehung der Auflagefläche mit einer Drehung des Rückhaltemittels. Eine synchronisierte Drehung der Auflagefläche und des Rückhaltemittels bewirkt ein Kippen eines Behälters, der vor der Drehung so auf der Auflagefläche steht, dass die Entnahmeöffnung nach oben zeigt. Nach dem Kippen zeigt die Entnahmeöffnung des gekippten Behälters schräg oder senkrecht nach unten. Das Rückhaltemittel ist so angeordnet, dass es nach der synchronisierten Drehung eine Linearbewegung eines im Behälter befindlichen Gegenstands durch die Entnahmeöffnung hindurch verhindert.

Die Vorrichtung und das Verfahren ermöglichen es, ohnehin vorhandene Behälter zu verwenden. Die Erfindung spart die Notwendigkeit ein, spezielle Behälter vorzusehen, die an eine Entlade-Vorrichtung adaptiert sind.

Die Vorrichtung und das Verfahren erfordern es nicht, Abmessungen oder das Gewicht eines Gegenstands im Behälter zu messen, um den Gegenstand aus dem Behälter zu entnehmen.

Die Vorrichtung und das Verfahren ermöglichen eine relativ einfache mechanische Konstruktion.

Die Vorrichtung und das Verfahren ersparen die Notwendigkeit, einen Gegenstand durch Ausüben eines Anpressdrucks entgegen der Gewichtskraft aus dem Behälter zu entnehmen. Dies hätte den Nachteil, dass der Gegenstand durch den Anpressdruck beschädigt werden könnte.

Die Auflagefläche und die Rückhaltemittel sind um zwei verschiedene Drehachsen drehbar. Dadurch lässt sich das Rückhaltemittel so ausgestalten, dass es eine Linearbewegung des Gegenstands in zwei verschiedene Richtungen vermeidet.

Vorzugsweise umfasst das Rückhaltemittel zwei Begrenzungselemente. Diese sind in eine Eingreif-Position schwenkbar, in der sich ein im Behälter befindlicher Gegenstand zwischen den beiden Begrenzungselementen befindet. Die Begrenzungselemente liegen dann am Gegenstand an. Die beiden Begrenzungselemente vermeiden, dass der Gegenstand aus dem gekippten Behälter fällt.

Im Folgenden wird die Erfindung anhand eines Ausführungsbeispiels erläutert. Dabei zeigen
- Fig. 1: die Vorrichtung in der Ausgangsposition ohne Behälter;
- Fig. 2: die Vorrichtung in der Ausgangsposition mit Behälter;
- Fig. 3: die Vorrichtung mit einem halb herabgesenktem Begrenzungselement;
- Fig. 4: die Vorrichtung mit einem vollständig herabgesenktem Begrenzungselement;
- Fig. 5: die Vorrichtung mit beiden vollständig herabgesenkten Begrenzungselementen, die damit in der Eingreif-Position sind;
- Fig. 6: die Vorrichtung während der Drehung der Auflageflächen;
- Fig. 7: die Vorrichtung während fortgesetzter Drehung der Auflageflächen;
- Fig. 8: die Vorrichtung in einer Situation, in der nur noch die hintere Auflagefläche gedreht wird;
- Fig. 9: die Vorrichtung in derselben Situation wie in Fig. 8, aber mit abgezogenem Behälter;
- Fig. 10: die Vorrichtung mit vollständig entferntem Behälter während des Rückdrehens der Auflageflächen;
- Fig. 11: die Vorrichtung nach einer Fortsetzung des Rückdrehens von Fig. 10;
- Fig. 12: die Vorrichtung nach Abschluss der Rückdrehung der beiden Auflageflächen;
- Fig. 13: die Vorrichtung mit den Begrenzungselementen in der Freigabe-Position.

Im Ausführungsbeispiel wird die Vorrichtung eingesetzt, um aus einem Behälter B einen Stapel St flacher Postsendungen zu entnehmen. Der Behälter B hat einen rechteckigen Boden, vier Seitenwände und eine rechteckige Entnahmeöffnung. Er ist also nach oben offen. Der Behälter B wird nach dem Entladen wiederverwendet.

Die Postsendungen stehen aufrecht und parallel zueinander im Behälter B. Jeweils eine Schmalseite steht auf dem Behälterboden. Durch das Entladen sollen weder die Postsendungen noch der Behälter B beschädigt werden.

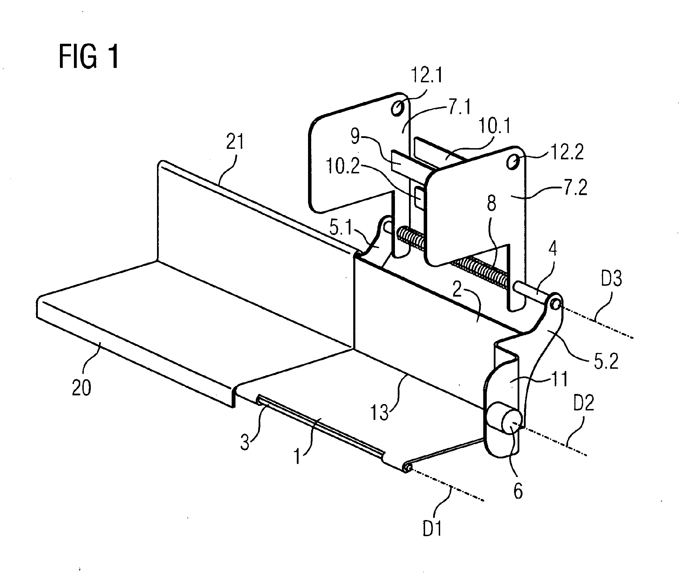

Fig. 1 zeigt die Vorrichtung vor Beginn des Entladens. Im Ausführungsbeispiel sollen die Postsendungen des Stapels St auf zwei Ausrichtflächen 20, 21 eines Rütteltisches geschoben werden. Dieser Rütteltisch bewirkt eine Ausrichtung der Postsendungen an den beiden Ausrichtflächen 20, 21. Diese Ausrichtung wird durchgeführt, damit eine Sortieranlage die nachfolgenden Schritte ausführen kann.

Die Vorrichtung besitzt eine Auflageeinrichtung für den gefüllten Behälter B. Diese Auflageeinrichtung umfasst zwei Auflageflächen 1, 2. Die Auflagefläche 1 ist schwenkbar in einer Halterung gelagert. Im Ausführungsbeispiel ist die Auflagefläche 1 so mit der Halterung 3 verbunden, dass die Auflagefläche 1 um eine Drehachse D1 drehbar ist.

Die Auflagefläche 2 ist schwenkbar gelagert. Im Ausführungsbeispiel ist die Auflagefläche 2 um eine Drehachse D2 drehbar gelagert. Im Ausführungsbeispiel verlaufen die beiden Drehachsen D1, D2 parallel zueinander.

Zwei Abstandselemente verbinden die Auflagefläche 2 mit einer Halterung. In Fig. 1 ist ein Abstandselement 6 gezeigt. Das Abstandselement 6 befindet sich zwischen der Auflagefläche 2 und der Halterung und ist beispielsweise an einem Anschlagelement 11 angebracht.

In den Figuren ist die Halterung 3 für die Auflagefläche 1 angedeutet, während die Halterung für die Auflagefläche 2 nicht dargestellt ist.

Vorzugsweise verläuft die Drehachse D2 durch den Schwerpunkt des beladenen Behälters B oder nahe an diesem Schwerpunkt vorbei. Durch diese Ausgestaltung lässt sich der gefüllte Behälter B dann, wenn er auf der Auflagefläche 1 steht und an die Auflagefläche 2 angrenzt, leicht und mit geringem Kraftaufwand um die Drehachse D2 drehen.

In einer Ausführungsform besitzt die Vorrichtung weiterhin eine Führungseinrichtung, die das Schwenken der Auflagefläche 2 führt. In den Figuren ist diese Führungseinrichtung nicht dargestellt. Diese Führungseinrichtung hat z. B. die Form einer bogenförmigen Führungsschiene. Die Auflagefläche 2 besitzt einen Vorsprung. Dieser Vorsprung korrespondiert mit der Führungseinrichtung. Beispielsweise hat der Vorsprung die Form eines Stifts und greift in die Führungsschiene ein. Die Führungseinrichtung stabilisiert damit eine Drehung der Auflagefläche 2 um die Drehachse D2. Zugleich begrenzt die Führungseinrichtung eine Drehung der Auflagefläche 2.

Jede Auflagefläche 1, 2 lässt sich um einen Winkel drehen, der im Ausführungsbeispiel zwischen 90 Grad und 130 Grad liegt, und zwar zwischen einer waagrechten und einer annähernd senkrechten Position. Die beiden Auflageflächen 1, 2 sind durch eine Synchronisierungseinrichtung miteinander verbunden. Diese Synchronisierungseinrichtung synchronisiert Drehungen der beiden Auflageflächen 1, 2 miteinander.

In einer Ausführungsform umfasst die Synchronisierungseinrichtung eine Feder, die sich an der Halterung der Auflagefläche 1 oder an der Führungseinrichtung der Auflagefläche 2 abstützt und die Auflagefläche 1 gegen die Kante 7 drückt. In einer anderen Ausführungsform umfasst das Synchronisierungseinrichtung ein Gelenk, das die beiden Auflageflächen 1, 2 miteinander verbindet.

Die Vorrichtung besitzt weiterhin zwei flächige Begrenzungs- und Begrenzungselemente 7.1, 7.2 ("Paddel"). Diese Begrenzungselemente 7.1, 7.2 sind schwenkbar an einer Begrenzungselemente-Halterung 4 befestigt. Im Ausführungsbeispiel weist das Begrenzungselement 7.1 eine rechteckige, annähernd quadratische Fläche mit abgerundeten Ecken und einer kreisförmigen Aussparung 12.1 sowie ein Abstandselement auf. Das Begrenzungselement 7.2 weist ebenfalls eine rechteckige, annähernd quadratische Fläche mit abgerundeten Ecken und eine kreisförmige Aussparung 12.2 sowie ein Abstandselement auf. Diese Aussparungen 12.1, 12.2 verdeutlichen in den nachfolgenden Figuren die Drehung der Begrenzungselemente 7.1, 7.2.

Die Begrenzungselemente-Halterung 4 hat im Ausführungsbeispiel die Form einer Welle, auf der die beiden Begrenzungselemente 7.1, 7.2 drehbar gelagert sind. Durch diese Lagerung lassen sich die beiden Begrenzungselemente 7.1, 7.2 und damit die Rückhalteelemente 9, 10.1, 10.2 um eine Drehachse D3 drehen. Die Drehachse D3 verläuft im Ausführungsbeispiel parallel zu den beiden Drehachsen D1 und D2.

Zwei Abstandselemente 5.1, 5.2 verbinden die Begrenzungselemente-Halterung 4 mit der Auflagefläche 2. Das eine Abstandselement 5.2 geht in das Anschlagelement 11 der Auflagefläche 2 über. Bei einer Drehung der Auflagefläche 2 um die Drehachse D2 werden die beiden Abstandselemente 5.1, 5.2 und damit die Begrenzungselemente-Halterung 4 mit gedreht.

Bei einer Drehung der Auflagefläche 2 um die Drehachse D2 befindet sich zwischen derjenigen Kante 13, die den Abstandselementen 5.1, 5.2 gegenüberliegt, und der anderen Auflagefläche 1 ein Schlitz, dessen Breite bei den Drehungen vorzugsweise einen vorgegebenen Wert nicht übersteigt. Die Breite des Schlitzes variiert während des Entladens des Behälters B, aber nur innerhalb der vorgegebenen Grenzen. Dadurch wird verhindert, dass ein Behälter B zwischen den beiden Auflageflächen 1, 2 hindurch nach unten fällt.

Die Begrenzungselemente 7.1, 7.2 lassen sich zwischen einer Eingreif-Position und einer Freigabe-Position hin- und herschwenken. In der Eingreif-Position greifen die beiden Begrenzungselemente 7.1, 7.2 in einen Behälter B, der auf der einen Auflagefläche 1 steht, ein. In der Freigabe-Position lässt sich ein Behälter B auf der Auflagefläche 1 hin- und herschieben, ohne dass die Begrenzungselemente 7.1, 7.2 diese Bewegung behindern.

Im Ausführungsbeispiel sind die beiden Begrenzungselemente 7.1, 7.2 drehbar auf der Begrenzungselemente-Halterung 4 befestigt und lassen sich durch eine Drehung um die Drehachse D3 in die Eingreif-Position und aus der Eingreif-Position heraus bewegen.

Der Abstand zwischen den beiden Begrenzungselementen 7.1, 7.2 ist veränderbar. Damit lassen sich die Begrenzungselemente an unterschiedlich gefüllte Behälter sowie an Behälter unterschiedlicher Größen anpassen.

Eine Feder 8 zieht die beiden Begrenzungselemente 7.1, 7.2 zusammen. Dies bewirkt, dass die beiden Begrenzungselemente 7.1, 7.2 in der Eingreifposition Postsendungen im Behälter B zusammendrücken. Der Anpressdruck ist aber so gering, dass das Zusammenpressen Postsendungen nicht beschädigt. Der Anpressdruck, den die beiden Begrenzungselemente 7.1, 7.2 aufbringen, ist weiterhin nicht so groß, dass er die Gewichtskraft der Postsendungen kompensiert. Ein so großer Anpressdruck könnte Postsendungen beschädigen oder dazu führen, dass Postsendungen aneinander haften oder aneinander kleben und sich nur schwer vereinzeln lassen.

Im Ausführungsbeispiel ist ein Begrenzungselement 7.2 so an der Welle 4 befestigt, dass es sich nicht parallel zur Drehachse D3 verschieben lässt. Die Feder 8 stützt sich auf diesem Begrenzungselement 7.2 ab. Das andere Begrenzungselement 7.1 lässt sich parallel zur Drehachse D3 verschieben. Die Feder 8 ist mit dem anderen Begrenzungselement 7.1 verbunden.

Anstelle der Feder 8 lässt sich auch z. B. ein Zylinder verwenden, in dem ein Kolben hin- und hergleitet. Der Kolben und mehrere Innenwände des Zylinders binden einen abgeschlossenen Raum, der mit einem Gas gefüllt ist.

Mindestens eines der Begrenzungselemente 7.1, 7.2 besitzt mindestens ein Rückhalteelement, das sich auf das andere Begrenzungselement zu erstreckt. Dieses Rückhalteelement ist starr mit dem Begrenzungselement verbunden und steht vorzugsweise senkrecht auf der Fläche des Begrenzungselements. Im Ausführungsbeispiel weist das Begrenzungselement 7.1 ein längeres Rückhalteelement 9 auf, das mit dem Begrenzungselement 7.1 starr verbunden ist. Mit dem Begrenzungselement 7.2 sind zwei kürzere Rückhaltelemente 10.1, 10.2 starr verbunden.

Das Rückhalteelement 9 steht senkrecht auf der Fläche des Begrenzungselements 7.1, die beiden Rückhalteelemente 10.1, 10.2 senkrecht auf der Fläche des Rückhalteelements 7.2.

In der Freigabe-Position bewirkt die Feder 8, dass das Rückhalteelement 9 des einen Begrenzungselements 7.1 an das andere Begrenzungselement 7.2 stößt. In der Eingreif-Position passiert dies auch, es sei denn, zwischen den beiden Begrenzungselementen 7.1 und 7.2 befinden sich so viele Postsendungen, dass deren gesamte Dicke größer als die Länge des Rückhalteelements 9 ist.

Im Folgenden wird beschrieben, wie die Postsendungen mit Hilfe der erfindungsgemäßen Vorrichtung aus dem Behälter B entnommen werden.

Der Werker bringt die Vorrichtung in eine Position, in der sich die beiden Begrenzungselemente 7.1, 7.2 in der Freigabe-Position befinden und die beiden Auflageflächen 1,2 senkrecht aufeinander stehen, und zwar so, dass die Auflagefläche 1 waagrecht und die Auflagefläche 2 senkrecht steht. Fig. 1 zeigt diese Ausgangsposition.

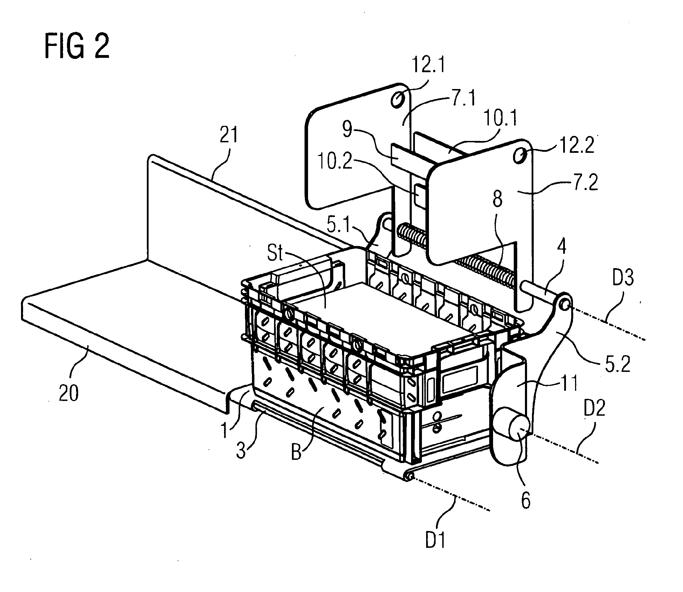

Der Werker - oder ein Handhabungsautomat - stellt den beladenen Behälter B auf die in der Ausgangsposition waagrechte Auflagefläche 1 und schiebt den Behälter B gegen die jetzt senkrechte Auflagefläche 2. Vorzugsweise schiebt er weiterhin den Behälter B gegen das Anschlagelement 11. Fig. 2 zeigt die Vorrichtung mit dem beladenen Behälter B auf der Auflagefläche 1.

In einer - in den Figuren nicht gezeigten - Ausführungsform wird der Behälter B temporär in einer bestimmten Position relativ zu den Auflageflächen 1,2 fixiert. Beispielsweise besitzt mindestens eine Auflagefläche eine Wölbung, die um die obere Kante einer Seitenwand des Behälters B herum fasst. Oder der Behälter B weist einen Schnappverschluss auf, der in eine Aussparung des Behälters B eingreift oder um einen Vorsprung des Behälters B herum fasst.

Der Werker - oder der Automat - schwenkt zunächst das Begrenzungselement 7.1 in die Eingreif-Position. Dies tut er, indem er es um die Drehachse D3 dreht. Das Begrenzungselement 7.1 lässt sich entlang der Drehachse D3 verschieben. Bei Bedarf verschiebt der Werker - oder der Automat - das Begrenzungselement 7.1 parallel zur Drehachse D3, und zwar so, dass das Begrenzungselement 7.1 zwischen einer Querwand des Behälters B und dem Stapel St in den Behälter B eingreift.

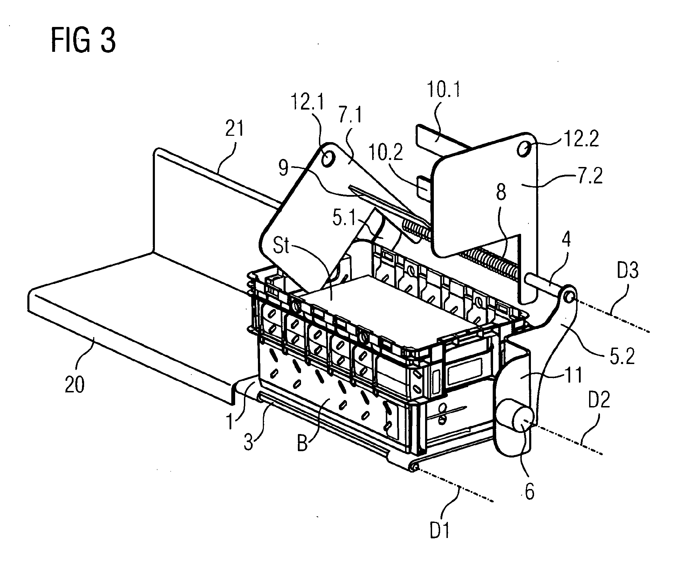

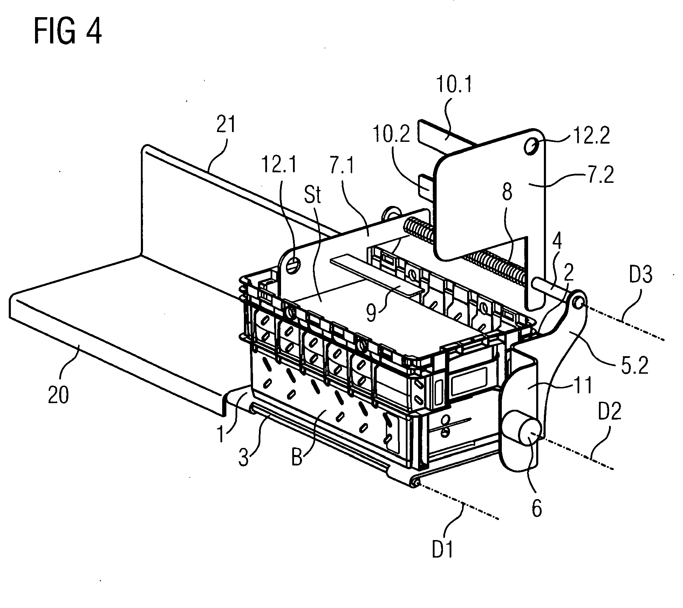

Fig. 3 zeigt die Vorrichtung mit halb herabgesenktem Begrenzungselement 7.1. Fig. 4 zeigt die Vorrichtung mit vollständig herabgesenktem Begrenzungselement 7.1. Das Begrenzungselement 7.1 wird zwischen die eine Querwand des Behälters B und den Stapel St eingeführt. Das andere Begrenzungselement 7.2 befindet sich sowohl in Fig. 3 als auch in Fig. 4 noch in der Freigabe-Position. Die Auflagefläche 2 ist hinter dem Behälter B verborgen.

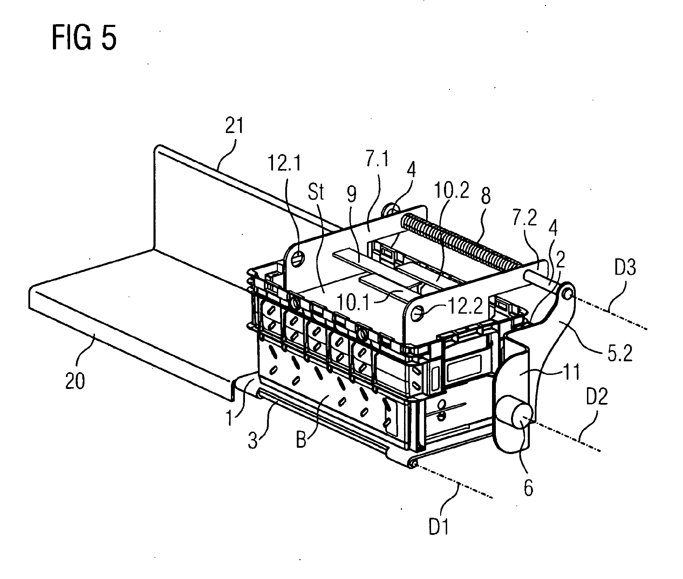

Der Werker dreht anschleißend auch das andere Begrenzungselement 7.2 um die Drehachse D3. Fig. 5 zeigt die Vorrichtung mit beiden Begrenzungselementen 7.1, 7.2 in der Eingreif-Position. Die Begrenzungselemente 7.1, 7.2 werden in der Eingreif-Position arretiert.

Anschließend löst der Werker eine synchronisierte Drehung der beiden Auflageflächen 1 und 2 aus. Beispielsweise drückt er einen Knopf. Ein Antriebsmittel in Form einer Feder oder eines Kolbens dreht die beiden Auflageflächen 1, 2. Hierbei drehen sich die Auflagefläche 1 um die Drehachse D1 und die Auflagefläche 2 um die Drehachse D2. Die Synchronisierungseinrichtung, die in den Figuren nicht gezeigt wird, stellt sicher, dass die beiden Auflageflächen 1, 2 sich mit der gleichen Winkelgeschwindigkeit um ihre jeweilige Drehachse drehen.

Die beiden Begrenzungselemente 7.1, 7.2 in der Eingreifposition und somit auch die Rückhalteelemente 9, 10.1, 10.2 drehen sich mit der Auflagefläche 2 um die zweite Drehachse D2 und verändern ihre Relativposition zur Auflagefläche 2 nicht. Im Ausführungsbeispiel gehören die Auflagefläche 21, die beiden Begrenzungselemente 7.1, 7.2 sowie die Rückhalteelemente 9, 10.1, 10.2 zum Rückhaltemittel

Die nicht gezeigte Synchronisierungseinrichtung, die Abstandselemente 5.1, 5.2 und die Halterung 4 für die Begrenzungselemente 7.1, 7.2 fungieren gemeinsam als das Synchronisierungsmittel, das eine Drehung der Auflagefläche 1 um die Drehachse D1 mit einer Drehung der Rückhalteelemente 9, 10.1, 10.2, der Begrenzungselemente 7.1, 7.2 und der Auflagefläche 2 um die Drehachse D2 synchronisiert.

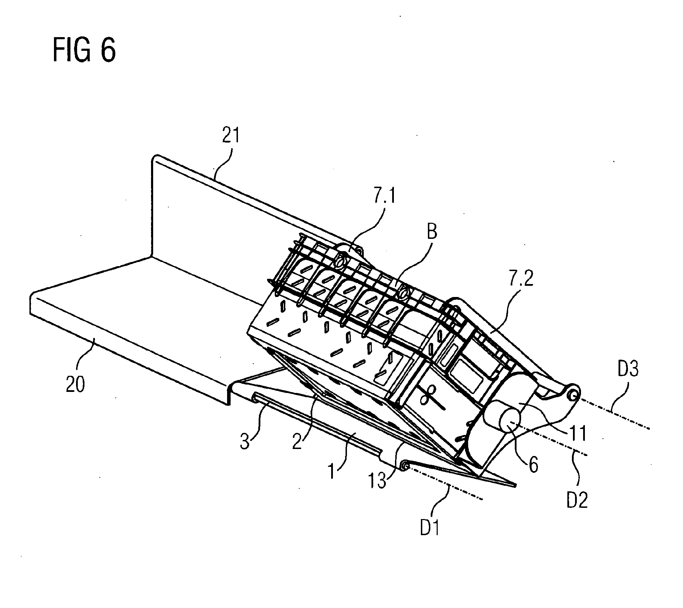

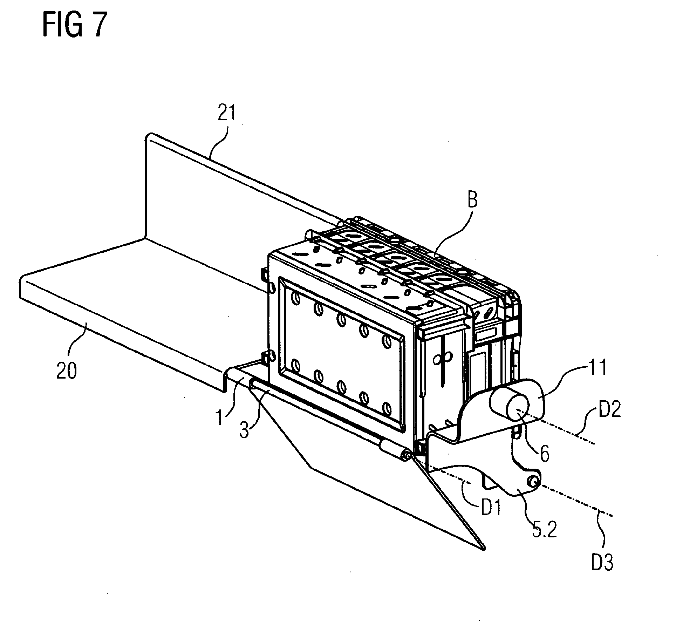

Fig. 6 zeigt die Vorrichtung während der Drehung der beiden Auflageflächen 1, 2 um die Drehachsen D1 und D2. Fig. 7 zeigt die Fortsetzung der Drehung. Die synchronisierten Drehungen der beiden Auflageflächen 1, 2 und der Rückhalteelemente 9, 10.1, 10.2 bewirken ein Kippen des gefüllten Behälters B.

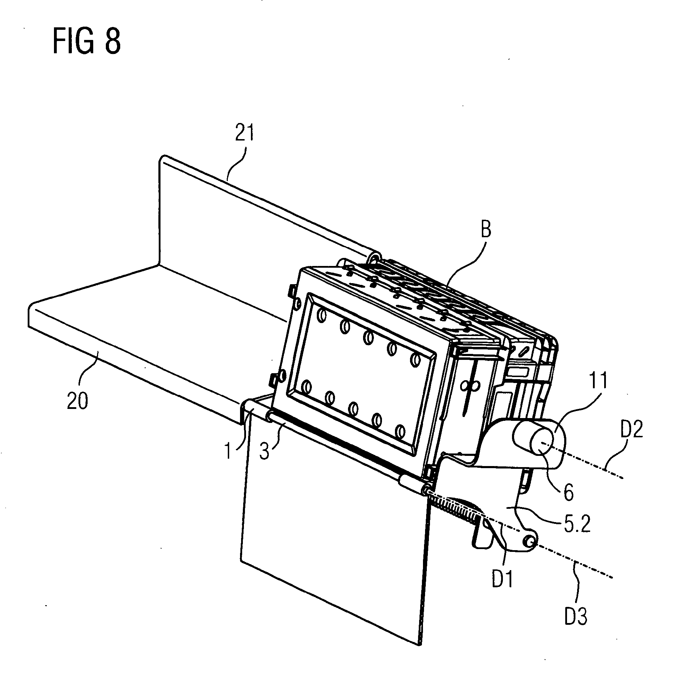

In Fig. 8 wird die Vorrichtung in einer Situation gezeigt, in der die Drehung der Auflagefläche 1 um die Drehachse D1 beendet ist. Die Auflagefläche 2 wird noch um einen geringen Winkel (kleiner als 10 Grad) weiter im die Drehachse D2 gedreht. Die beiden Drehachsen D1 und D3 liegen in der Blickrichtung von Fig. 8 übereinander.

Die Entnahmeöffnung des Behälters B zeigt schräg nach unten, der Boden schräg nach oben. Das Gewicht des Stapels St ruht teilweise auf den Rückhalteelementen 9, 10.1, 10.2.

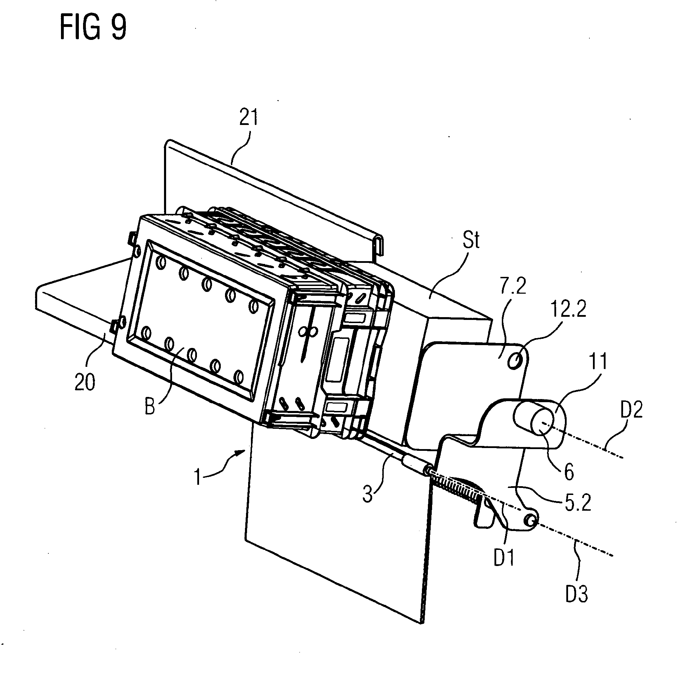

Nunmehr lässt sich der Behälter B leicht zur Seite ziehen. Die beiden Begrenzungselemente 7.1, 7.2 verhindern, dass der Stapel St mit abgezogen wird. In Fig. 9 wird die Vorrichtung mit abgezogenem Behälter B gezeigt. Der Behälter B ist noch zu sehen.

Nachdem der Behälter B vollständig abgezogen ist, löst der Werker - oder der Handhabungsautomat - eine erneute Drehung der beiden Auflageflächen 1, 2 aus. Die Auflagefläche 1 wird wiederum um die Drehachse D1 gedreht, die Auflagefläche 2 wiederum um die Drehachse D2. Beide Auflageflächen 1, 2 werden jetzt in eine Drehrichtung gedreht, die der Drehrichtung beim Drehen mit dem Behälter B entgegengesetzt ist. Der Stapel St liegt hierbei auf der Auflagefläche 2.

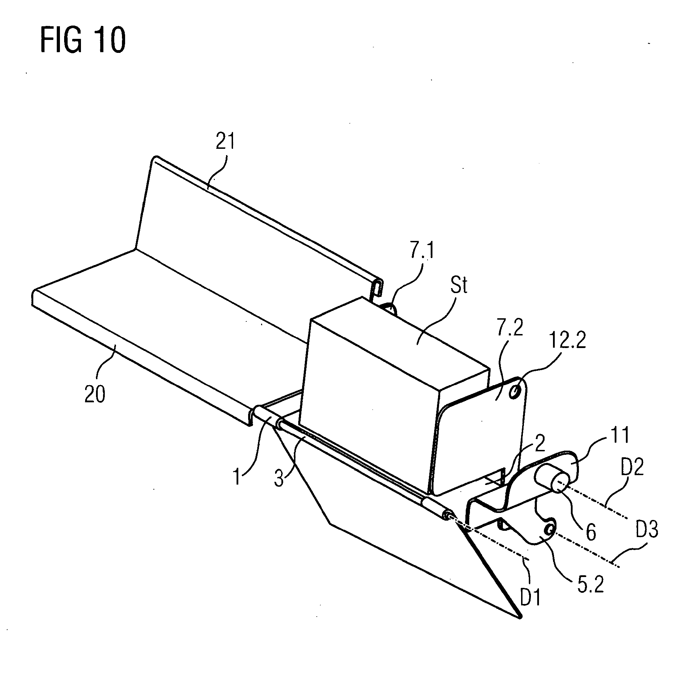

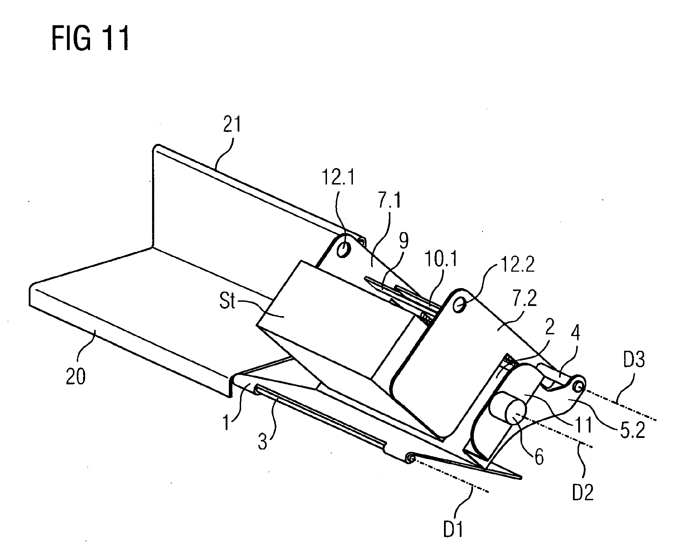

Fig. 10 zeigt die Vorrichtung mit vollständig entferntem Behälter B während des Rückdrehens der Auflageflächen. Fig. 11 zeigt die Vorrichtung nach einer Fortsetzung des Rückdrehens. Die Rückhalteelemente 9, 10.1, 10.2 verhindern, dass der Stapel St seitlich wegrutscht.

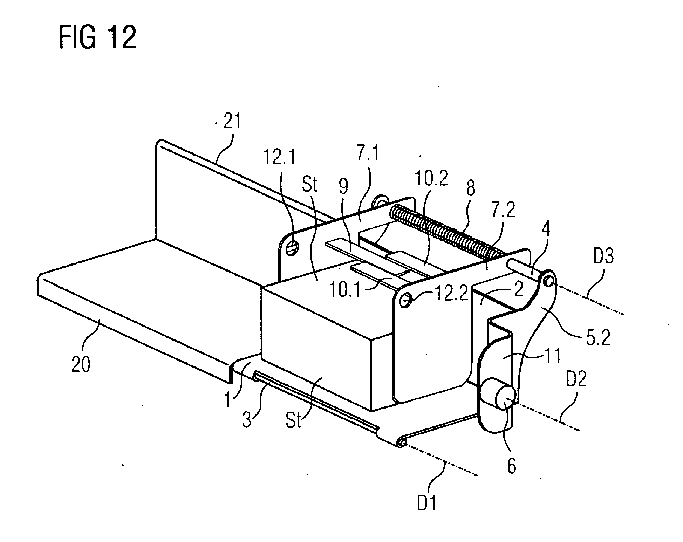

Die Rückdrehung ist abgeschlossen, sobald die Auflagefläche 1 wieder in eine waagrechte Position und die Auflagefläche 2 wieder in eine senkrechte Position geraten ist. Fig. 12 zeigt die Vorrichtung nach dem Abschluss dieser Rückdrehung.

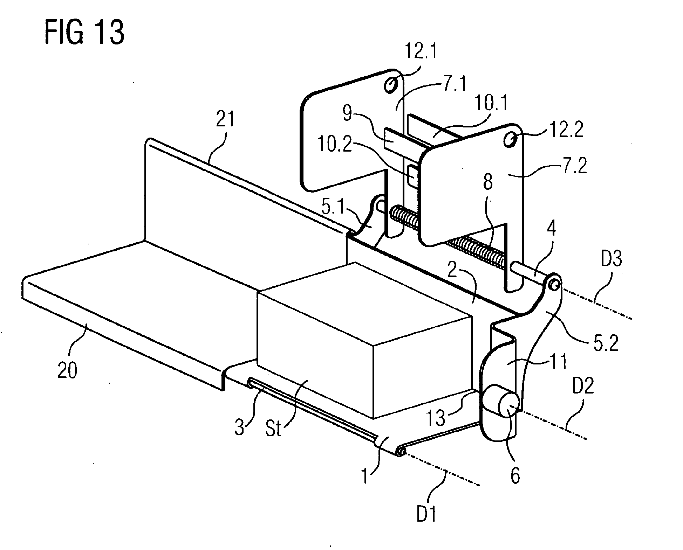

Die Begrenzungselemente 7.1, 7.2 haben sich während der gesamten Rückdrehung in der Eingreif-Position befunden. Nachdem die Rückdrehung abgeschlossen ist, schwenkt der Werker oder der Automat die Begrenzungselemente 7.1, 7.2 aus der Eingreif-Position in die Freigabe-Position. Fig. 13 zeigt die Vorrichtung mit den Begrenzungselementen 7.1, 7.2 in der Freigabe-Position.

Nunmehr lässt sich der Stapel St mit den Postsendungen entfernen. Im Ausführungsbeispiel wird dieser Stapel St auf die beiden Ausrichtflächen 20, 21 des Rütteltisches geschoben.

**Bezugszeichenliste**

| *Bezugszeichen* | *Bedeutung* |
|---|---|
| 1 | Auflagefläche |
| 2 | Auflagefläche |
| 3 | Halterung für die Auflagefläche 1 |
| 4 | Halterung für die Begrenzungselemente 7.1, 7.2 |
| 5.1, 5.2 | Abstandselemente für die Begrenzungselemente 7.1, 7.2 |
| 6 | Abstandselement für die Auflagefläche 2 |
| 7.1, 7.2 | Begrenzungselemente ("Paddel") |
| 8 | Feder zwischen den beiden Begrenzungselementen 7.1 und 7.2 |
| 9 | Rückhalteelement des Begrenzungselements 7.1 |
| 10.1, 10.2 | Rückhalteelemente des Begrenzungselements 7.2 |
| 11 | Anschlagelement |
| 12.1, 12.2 | Aussparungen in den Begrenzungselementen 7.1, 7.2 |
| 13 | Diejenige Kante der Auflagefläche 2, die den Abstandselementen 5.1, 5.2 gegenüberliegt |
| 20, 21 | Ausrichtflächen eines Rütteltisches |
| B | zu entleerender Behälter |
| D1 | Drehachse, um die die Auflagefläche 1 drehbar gelagert ist |
| D2 | Drehachse, um die die Auflagefläche 2 drehbar gelagert ist |
| D3 | Drehachse, um die die beiden Begrenzungselemente 7.1, 7.2 drehbar gelagert sind |
| St | Stapel mit Postsendungen |

## Patentansprüche

1. Vorrichtung zum Entladen eines Behälters (B),
wobei der Behälter (B) eine Entnahmeöffnung zum Entnehmen eines Gegenstands (St) aus dem Behälter (B) aufweist,
wobei die Entlade-Vorrichtung
- eine drehbar gelagerte Auflagefläche (1) und
- ein drehbar gelagertes Rückhaltemittel (2, 7.1, 7.2, 9, 10.1, 10.2)
umfasst,
wobei die Entlade-Vorrichtung so ausgestaltet ist, dass sie ein Kippen eines auf der Auflagefläche (1) befindlichen Behälters (B) dergestalt, dass die Entnahmeöffnung des gekippten Behälters (B) schräg oder senkrecht nach unten zeigt, zu bewirken vermag,
wobei das Rückhaltemittel (2, 7.1, 7.2, 9, 10.1, 10.2) so angeordnet ist, dass das Rückhaltemittel (2, 7.1, 7.2, 9, 10.1, 10.2) eine Linearbewegung eines im gekippten Behälter (B) befindlichen Gegenstands (St) durch die Entnahmeöffnung hindurch verhindert,
**dadurch gekennzeichnet, dass**
die Auflagefläche (1) um eine erste Drehachse (D1) drehbar gelagert ist,
das Rückhaltemittel (2, 7.1, 7.2, 9, 10.1, 10.2) um eine zweite Drehachse (D2) drehbar gelagert ist,
die Vorrichtung ein Synchronisierungsmittel (4, 5.1, 5.2) umfasst und
das Synchronisierungsmittel (4, 5.1, 5.2) zum Synchronisieren einer Drehung der Auflagefläche (1) um die erste Drehachse (D1) mit einer Drehung des Rückhaltemittels (2, 9, 10.1, 10.2) um die zweite Drehachse (D2) ausgestaltet ist, wobei
eine synchronisierte Drehung der Auflagefläche (1) und des Rückhaltemittels (2, 9, 10.1, 10.2) das Kippen eines Behälters (B), der vor dem Kippen so auf der Auflagefläche (1) steht, dass die Entnahmeöffnung nach oben zeigt,
dergestalt, dass die Entnahmeöffnung des gekippten Behälters (B) schräg oder senkrecht nach unten zeigt, bewirkt.

2. Vorrichtung nach Anspruch 1,
**dadurch gekennzeichnet, dass**
das Rückhaltemittel (2, 7.1, 7.2, 9, 10.1, 10.2) eine weitere Auflagefläche (2) umfasst,
die nach der Drehung den Behälter (B) trägt.

3. Vorrichtung nach Anspruch 2,
**dadurch gekennzeichnet, dass**
die weitere Auflagefläche (2) so angeordnet ist,
dass sie vor der synchronisierten Drehung senkrecht auf der Auflagefläche (1) steht.

4. Vorrichtung nach einem der Ansprüche 1 bis 3,
**dadurch gekennzeichnet, dass**
das Rückhaltemittel (2, 7.1, 7.2, 9, 10.1, 10.2) so angeordnet ist,
dass die zweite Drehachse (D2) durch den Schwerpunkt des mit einem Gegenstand (St) beladenen Behälters (B) verläuft.

5. Vorrichtung nach einem der Ansprüche 1 bis 4,
**dadurch gekennzeichnet, dass**
die Auflagefläche (1) so angeordnet ist,
dass sie bei der synchronisierten Drehung um einen Drehwinkel drehbar ist, der zwischen 90 Grad und 130 Grad liegt.

6. Vorrichtung nach einem der Ansprüche 1 bis 5,
**dadurch gekennzeichnet, dass**
die beiden Drehachsen (D1, D2) parallel zueinander verlaufen.

7. Vorrichtung nach einem der Ansprüche 1 bis 6,
**dadurch gekennzeichnet, dass**
das Rückhaltemittel (2, 7.1, 7.2, 9, 10.1, 10.2) mindestens ein Rückhalteelement (9, 10.1, 10.2) aufweist,
das mindestens eine Rückhalteelement (9, 10.1, 10.2) in eine Eingreif-Position schwenkbar ist,
in der es eine Linearbewegung eines im Behälter (B) befindlichen Gegenstands (St) durch die Entnahmeöffnung hindurch verhindert.

8. Vorrichtung nach einem der Ansprüche 1 bis 7,
**dadurch gekennzeichnet, dass**
das Rückhaltemittel (2, 7.1, 7.2, 9, 10.1, 10.2) zwei Begrenzungselemente (7.1, 7.2) umfasst,
die in eine Eingreif-Position schwenkbar sind,
in der sich ein im Behälter (B) befindlicher Gegenstand (St) zwischen den beiden Begrenzungselementen (7.1, 7.2) befindet und
die Begrenzungselemente (7.1, 7.2) am Gegenstand (St) anliegen.

9. Vorrichtung nach Anspruch 8,
**dadurch gekennzeichnet, dass**
jedes der beiden Begrenzungselemente (7.1, 7.2) sich in einer Ebene erstreckt
und so angeordnet ist, dass die Ebene senkrecht auf der zweiten Drehachse (D2) steht.

10. Vorrichtung nach Anspruch 8 oder Anspruch 9,
**dadurch gekennzeichnet, dass**
die beiden Begrenzungselemente (7.1, 7.2) um eine dritte Drehachse (D3) drehbar gelagert sind und
durch Drehung um die dritte Drehachse (D3) in die Eingreif-Position schwenkbar sind.

11. Vorrichtung nach einem der Ansprüche 8 bis 10,
**dadurch gekennzeichnet, dass**
die beiden Begrenzungselemente (7.1, 7.2) in der Eingreif-Position arretierbar sind.

12. Vorrichtung nach einem der Ansprüche 8 bis 11,
**dadurch gekennzeichnet, dass**
die beiden Begrenzungselemente (7.1, 7.2) so gelagert sind, dass der Abstand zwischen ihnen veränderbar ist.

13. Vorrichtung nach einem der Ansprüche 8 bis 12,
**dadurch gekennzeichnet, dass**
das Rückhaltemittel (2, 7.1, 7.2, 9, 10.1, 10.2) zwei Rückhalteelemente (9, 10.1, 10.2) umfasst,
jedes Rückhalteelement (9, 10.1, 10.2) in eine Eingreif-Position schwenkbar ist,
in der es eine Linearbewegung eines im Behälter (B) befindlichen Gegenstands (St) durch die Entnahmeöffnung hindurch verhindert, und
jedes Rückhalteelement (9, 10.1, 10.2) mit jeweils einem der Begrenzungselemente (7.1, 7.2) starr verbunden ist.

14. Vorrichtung nach einem der Ansprüche 8 bis 13,
**dadurch gekennzeichnet, dass**
das Rückhaltemittel (2, 7.1, 7.2, 9, 10.1, 10.2) eine weitere Auflagefläche (2) umfasst,
die nach der Drehung den Behälter (B) trägt, und
die beiden Begrenzungselemente (7.1, 7.2) drehbar mit der weiteren Auflagefläche (2) verbunden sind.

15. Verfahren zum Entladen eines Behälters (B),
welcher eine Entnahmeöffnung aufweist,
wobei das Verfahren die Schritte umfasst, dass
- der einen Gegenstand (St) enthaltende Behälter B auf eine Auflagefläche (1) gestellt wird,
- die Auflagefläche (1) und ein Rückhaltemittel (2, 7.1, 7.2, 9, 10.1, 10.2) gedreht werden,
- ein Kippen des Behälters (B) dergestalt bewirkt wird, dass nach dem Kippen die Entnahmeöffnung schräg oder senkrecht nach unten zeigt und das Rückhaltemittel (2, 7.1, 7.2, 9, 10.1, 10.2) eine Linearbewegung des im Behälter (B) befindlichen Gegenstands (St) durch die Entnahmeöffnung hindurch verhindert,
**dadurch gekennzeichnet, dass**
- der Behälter (B) so auf die Auflagefläche (1) gestellt wird, dass die Entnahmeöffnung nach oben zeigt,
- die Auflagefläche (1) um eine erste Drehachse (D1) gedreht wird
- das Rückhaltemittel (2, 7.1, 7.2, 9, 10.1, 10.2) dergestalt um eine zweite Drehachse (D2) gedreht wird, dass die Drehungen der Auflagefläche (1) und des Rückhaltemittels (2, 7.1, 7.2, 9, 10.1, 10.2) synchronisiert erfolgen,
- die beiden synchronisierten Drehungen das Kippen des Behälters (B) bewirken und
- der gekippte Behälter (B) durch eine Relativbewegung des Behälters (B) relativ zum Rückhaltemittel (2, 7.1, 7.2, 9, 10.1, 10.2) entfernt wird.

16. Verfahren nach Anspruch 15,
**dadurch gekennzeichnet, dass**
die synchronisierten Drehungen so ausgeführt werden,
dass der Behälter (B) um die zweite Drehachse (D2) und
um einen Drehwinkel, der zwischen 90 Grad und 130 Grad liegt, gedreht wird.

17. Verfahren nach Anspruch 15 oder Anspruch 16,
**dadurch gekennzeichnet, dass**
das Rückhaltemittel (2, 7.1, 7.2, 9, 10.1, 10.2) zwei Begrenzungselemente (7.1, 7.2) umfasst,
nach dem Stellen des Behälters (B) auf die Auflagefläche (1) und vor der Durchführung der synchronisierten Drehungen
die beiden Begrenzungselemente (7.1, 7.2) in eine Eingreif-Position gebracht werden,
in welcher sich der Gegenstand (St) zwischen den Begrenzungselemente (7.1, 7.2) befindet,
beide Begrenzungselemente (7.1, 7.2) am Gegenstand (St) anliegen und
die Begrenzungselemente (7.1, 7.2) bei der Drehung des Rückhaltemittels (2, 7.1, 7.2, 9, 10.1, 10.2) synchronisiert um die zweite Drehachse (D2) gedreht werden.

## Claims

1. Device for emptying a container (B),
with the container (B) having a removal opening for removing an object (St) from the container (B),
with the emptying device having
- a rotatably mounted contact surface (1) and
- a rotatably mounted retaining means (2, 7.1, 7.2, 9, 10.1, 10.2),
with
the emptying device being configured such that it may be able to cause a container (B) disposed on the contact surface (1) to tilt such that the removal opening of the tilted container (B) points obliquely or perpendicularly downwards,
with the retaining means (2, 7.1, 7.2, 9, 10.1, 10.2) being arranged such that the retaining means (2, 7.1, 7.2, 9, 10.1, 10.2) prevents a linear movement of an object (St) disposed in the tilted container (B) through the removal opening,
**characterised in that**
the contact surface (1) is rotatably mounted about a first axis of rotation (D1),
the retaining means (2, 7.1, 7.2, 9, 10.1, 10.2) is rotatably mounted about a second axis of rotation (D2),
the device includes a synchronisation means (4, 5.1, 5.2) and
the synchronisation means (4, 5.1, 5.2) is embodied for synchronising a rotation of the contact surface (1) about the first axis of rotation (D1) with a rotation of the retaining means (2, 9, 10.1, 10.2) about the second axis of rotation (D2), with
a synchronised rotation of the contact surface (1) and of the retaining means (2, 9, 10.1, 10.2) causing the container (B) to tilt, which, prior to tilting, rests on the contact surface (1), such that the removal opening points upwards,
such that the removal opening of the tilted container (B) points obliquely or perpendicularly downwards.

2. Device according to claim 1,
**characterised in that**
the retaining means (2, 7.1, 7.2, 9, 10.1, 10.2) includes a further contact surface (2),
which supports the container (B) after the rotation.

3. Device according to claim 2,
**characterised in that**
the further contact surface (2) is arranged such that it rests perpendicularly on the contact surface (1) prior to the synchronised rotation.

4. Device according to one of claims 1 to 3,
**characterised in that**
the retaining means (2, 7.1, 7.2, 9, 10.1, 10.2) is arranged such that the second axis of rotation (D2) runs through the centre of gravity of the container (B) loaded with the object (St).

5. Device according to one of claims 1 to 4,
**characterised in that**
the contact surface (1) is arranged such that it can be rotated about an angle of rotation during the synchronised rotation, said angle of rotation amounting to between 90 degrees and 130 degrees.

6. Device according to one of claims 1 to 5,
**characterised in that**
the two axes of rotation (D1, D2) run in parallel with one another.

7. Device according to one of claims 1 to 6,
**characterised in that**
the retaining means (2, 7.1, 7.2, 9, 10.1, 10.2) has at least one retaining element (9, 10.1, 10.2)
the at least one retaining element (9, 10.1, 10.2) can be pivoted into an engagement position,
in which it prevents a linear movement of an object (St) disposed in the container (B) through the removal opening.

8. Device according to one of claims 1 to 7,
**characterised in that**
the retaining means (2, 7.1, 7.2, 9, 10.1, 10.2) includes two bounding elements (7.1, 7.2),
which can be pivoted into an engagement position,
in which an object (St) disposed in the container (B) is disposed between the two bounding elements (7,1, 7.2) and
the bounding elements (7.1, 7.2) rest against the object (St).

9. Device according to claim 8,
**characterised in that**
each of the two bounding elements (7.1, 7.2) extends in a plane
and is arranged such that the plane is perpendicular on the second axis of rotation (D2).

10. Device according to claim 8 or claim 9,
**characterised in that**
the two bounding elements (7.1, 7.2) are rotatably mounted about a third axis of rotation (D3) and
can be pivoted into the engagement position by rotation about the third axis of rotation (D3).

11. Device according to one of claims 8 to 10,
**characterised in that**
the two bounding elements (7.1, 7.2) can be stopped in the engagement position.

12. Device according to one of claims 8 to 11,
**characterised in that**
the two bounding elements (7.1, 7.2) are mounted such that the distance between them can be changed.

13. Device according to one of claims 8 to 12,
**characterised in that**
the retaining means (2, 7.1, 7.2, 9, 10.1, 10.2) includes two retaining elements (9, 10.1, 10.2),
each retaining element (9, 10.1, 10.2) can be pivoted into an engagement position,
in which it prevents a linear movement of an object (St) disposed in the container (B) through the removal opening, and each retaining element (9, 10.1, 10.2) is rigidly connected to one of the bounding elements (7.1, 7.2) in each instance.

14. Device according to one of claims 8 to 13,
**characterised in that**
the retaining means (2, 7.1, 7.2, 9, 10.1, 10.2) includes a further contact surface (2),
which supports the container (B) after the rotation, and the two bounding elements (7.1, 7.2) are rotatably connected to the further contact surface (2).

15. Method for emptying a container (B),
which comprises a removal opening,
with the method including the steps, that
- the container (B) containing the object (St) is placed on a contact surface (1),
- the contact surface (1) and a retaining means (2, 7.1, 7.2, 9, 10.1, 10.2) are rotated,
- a tilting of the container (B) is effected such that after the tilting, the removal opening points obliquely or perpendicularly downwards and the retaining means (2, 7.1, 7.2, 8, 10.1, 10.2) prevents a linear movement of the object (St) disposed in the container (B) through the removal opening,
**characterised in that**
- the container (B) is placed on the contact surface (1) such that the removal opening points upwards,
- the contacts surface (1) is rotated about a first axis of rotation (D1),
- the retaining means (2, 7.1, 7.2, 9, 10.1, 10.2) is rotated about a second axis of rotation (D2) such that the rotations of the contact surface (1) and of the retaining means (2, 7.1, 7.2, 9, 10.1, 10.2) take place in a synchronised fashion,
- the two synchronised rotations effect the tilting of the container (B) and
- the tilted container (B) is removed by a relative movement of the container (B) relative to the retaining means (2, 7.1, 7.2, 9, 10.1, 10.2).

16. Method according to claim 15,
**characterised in that**
the synchronised rotations are executed such that the container (B) is rotated about the second axis of rotation (D2) and about an angle of rotation, which lies between 90 degrees and 130 degrees.

17. Method according to claim 15 or claim 16,
**characterised in that**
the retaining means (2, 7.1, 7.2, 9, 10.1, 10.2) includes two bounding elements (7.1, 7.2),
after placing the container (B) on the contact surface (1) and before implementing the synchronised rotations,
the two bounding elements (7.1, 7.2) are moved into an engagement position,
in which the object (St) is disposed between the bounding elements (7.1, 7.2),
both bounding elements (7.1, 7.2) rest on the object (St) and the bounding elements (7.1, 7.2) are rotated in a synchronised fashion about the second axis of rotation (D2) when rotating the retaining means (2, 7.1, 7.2, 9, 10.1, 10.2).

## Revendications

1. Dispositif de déchargement d'un récipient ( B ),
le récipient ( B ) ayant une ouverture de prélèvement pour prélever un objet ( St ) du récipient ( B ),
dans lequel le dispositif de prélèvement comprend
- une surface ( 1 ) de support montée tournante et
- un moyen ( 2, 7.1, 7.2, 9, 10.1, 10.2 ) de retenue monté tournant,
le dispositif de déchargement étant conformé de manière à pouvoir provoquer un basculement d'un récipient ( B ) se trouvant sur la surface ( 1 ) de support, de sorte que l'ouverture de prélèvement du récipient ( B ) basculé soit dirigée de manière inclinée ou verticalement vers le bas, le moyen ( 2, 7.1, 7.2, 9, 10.1, 10.2 ) de retenue étant disposé de manière à ce que le moyen ( 2, 7.1, 7.2, 9, 10.1, 10.2 ) de retenue empêche qu'un objet ( St ) se trouvant dans le récipient ( B ) basculé ne passe suivant un mouvement linéaire dans l'ouverture de prélèvement, **caractérisé en ce que**
la surface ( 1 ) de support est montée tournante autour d'un premier axe ( D1 ) de rotation,
le moyen ( 2, 7.1, 7.2, 9, 10.1, 10.2 ) de retenue est monté tournant autour d'un deuxième axe ( D2 ) de rotation,
le dispositif comprend un moyen ( 4, 5.1, 5.2 ) de synchronisation et
le moyen ( 4, 5.1, 5.2 ) de synchronisation est conformé pour synchroniser une rotation de la surface ( 1 ) de support autour du premier axe ( D1 ) de rotation avec une rotation du moyen ( 2, 9, 10.1, 10.2 ) de retenue autour du deuxième axe ( D2 ) de rotation, dans lequel une rotation synchronisée de la surface ( 1 ) de support et du moyen ( 2, 9, 10.1, 10.2 ) de retenue provoque le basculement d'un récipient ( B ), qui se trouve, avant le basculement sur la surface de support, de sorte que l'ouverture de prélèvement est dirigée vers le haut, de manière à ce que l'ouverture de prélèvement du récipient ( B ) basculé soit dirigée de manière inclinée ou verticalement vers le bas.

2. Dispositif suivant la revendication 1,
**caractérisé en ce que**
le moyen ( 2, 7.1, 7.2, 9, 10.1, 10.2 ) de retenue comporte une autre surface ( 2 ) de support,
qui, après la rotation, porte le récipient ( B ).

3. Dispositif suivant la revendication 2,
**caractérisé en ce que**
l'autre surface ( 2 ) de support est disposée,
de manière à être avant la rotation synchronisée perpendiculaire à la surface ( 1 ) d'appui.

4. Dispositif suivant l'une des revendications 1 à 3,
**caractérisé en ce que**
le moyen ( 2, 7.1, 7.2, 9, 10.1, 10.2 ) de retenue est disposé,
de manière à ce que le deuxième axe ( D2 ) de rotation passe par le centre de gravité du récipient ( B ) chargé d'un objet ( St ).

5. Dispositif suivant l'une des revendications 1 à 4,
**caractérisé en ce que**
la surface ( 1 ) de support est telle,
qu'elle peut tourner lors de la rotation synchronisée d'un angle de rotation, qui est compris entre 90 degrés et 130 degrés.

6. Dispositif suivant l'une des revendications 1 à 5,
**caractérisé en ce que**
les deux axes ( D1, D2 ) de rotation sont parallèles entre eux.

7. Dispositif suivant l'une des revendications 1 à 6,
**caractérisé en ce que**
le moyen ( 2, 7.1, 7.2, 9, 10.1, 10.2 ) de retenue a au moins un élément ( 9, 10.1, 10.2 ) de retenue,
le au moins un élément ( 9, 10.1, 10.2 ) de retenue peut basculer dans une position de pénétration,
dans laquelle il empêche qu'un objet ( St ) se trouvant dans le récipient ( B ) passe suivant un mouvement linéaire dans l'ouverture de prélèvement.

8. Dispositif suivant l'une des revendications 1 à 7,
**caractérisé en ce que**
le moyen ( 2, 7.1, 7.2, 9, 10.1, 10.2 ) de retenue comprend deux éléments ( 7.1, 7.2 ) de démarcation, qui peuvent pivoter dans une position de pénétration,
dans laquelle un objet ( St ) se trouvant dans le récipient ( B ) se trouve entre les deux éléments ( 7.1, 7.2 ) de démarcation et
les éléments ( 7.1, 7.2 ) de démarcation s'appliquent à l'objet ( St ).

9. Dispositif suivant la revendication 8,
**caractérisé en ce que**
chacun des deux éléments ( 7.1, 7.2 ) de démarcation s'étend dans un plan,
et est disposé de manière à ce que le plan soit perpendiculaire au deuxième axe ( D2 ) de rotation.

10. Dispositif suivant la revendication 8 ou la revendication 9,
**caractérisé en ce que**
les deux éléments ( 7.1, 7.2 ) de démarcation sont montés tournants autour d'un troisième axe ( D3 ) de rotation et peuvent pivoter pour venir dans la position de pénétration.

11. Dispositif suivant l'une des revendications 8 à 10,
**caractérisé en ce que**
les deux éléments ( 7.1, 7.2 ) de démarcation peuvent être bloqués dans la position de pénétration.

12. Dispositif suivant l'une des revendications 8 à 11,
**caractérisé en ce que**
les deux éléments ( 7.1, 7.2 ) de démarcation sont montés de manière à ce que la distance entre eux puisse être modifiée.

13. Dispositif suivant l'une des revendications 8 à 12,
**caractérisé en ce que**
le moyen ( 2, 7.1, 7.2, 9, 10.1, 10.2 ) de retenue comprend deux éléments ( 9, 10.1, 10.2 ) de retenue, chaque élément ( 9, 10.1, 10.2 ) de retenue peut pivoter pour venir dans une position de pénétration,
dans laquelle il empêche un objet ( St ) se trouvant dans le récipient ( B ) de passer suivant un mouvement linéaire dans l'ouverture de prélèvement, et
chaque élément ( 9, 10.1, 10.2 ) de retenue est relié rigidement à respectivement l'un des éléments ( 7.1, 7.2 ) de démarcation.

14. Dispositif suivant l'une des revendications 8 à 13,
**caractérisé en ce que**
le moyen ( 2, 7.1, 7.2, 9, 10.1, 10.2 ) de retenue comprend une autre surface ( 2 ) de support,
qui après la rotation porte le récipient ( B ), et
les deux éléments ( 7.1, 7.2 ) de démarcation sont reliés de manière à pouvoir tourner avec l'autre surface ( 2 ) de support.

15. Procédé de déchargement d'un récipient ( B ),
qui a une ouverture de prélèvement,
le procédé comprenant les stades, dans lesquels
- on met un récipient ( B ) contenant un objet ( St ) sur une surface ( 1 ) de support,
- on fait tourner la surface ( 1 ) de support et un moyen ( 2, 7.1, 7.2, 9, 10.1, 10.2 ) de retenue,
- on provoque un basculement du récipient ( B ) de manière à ce que, après le basculement, l'ouverture de prélèvement soit dirigée de manière inclinée ou verticalement vers le bas et de manière à ce que le moyen ( 2, 7.1, 7.2, 9, 10.1, 10.2 ) de retenue empêche que l'objet ( St ) se trouvant dans le récipient ( B ) ne passe suivant un mouvement linéaire dans l'ouverture de prélèvement,
**caractérisé en ce que**
- on met le récipient ( B ) sur la surface ( 1 ) de support de manière à ce que l'ouverture de prélèvement soit dirigée vers le haut,
- on fait tourner la surface ( 1 ) de support autour d'un premier axe ( D1 ) de rotation,
- on fait tourner le moyen ( 2, 7.1, 7.2, 9, 10.1, 10.2 ) de retenue autour du deuxième axe ( D2 ) de rotation de manière que les rotations de la surface ( 1 ) de support et du moyen ( 2, 7.1, 7.2, 9, 10.1, 10.2 ) de retenue s'effectuent de façon synchronisée,
- les deux mouvements synchronisés provoquent le basculement du récipient ( B ) et
- on éloigne le récipient ( B ) basculé par un mouvement relatif du récipient ( B ) par rapport au moyen ( 2, 7.1, 7.2, 9, 10.1, 10.2 ) de retenue.

16. Procédé suivant la revendication 15,
**caractérisé en ce que**
on exécute les rotations synchronisés,
de manière à ce que le récipient ( B ) tourne autour du deuxième axe ( D2 ) de rotation d'un angle de rotation, qui est compris entre 90 degrés et 130 degrés.

17. Dispositif suivant la revendication 15 ou la revendication 16,
**caractérisé en ce que**
le moyen ( 2, 7.1, 7.2, 9, 10.1, 10.2 ) de retenue comprend deux éléments ( 7.1, 7.2 ) de démarcation,
après avoir mis le récipient ( B ) sur la surface ( 1 ) de support et avant d'effectuer les rotations synchronisées, on met les deux éléments ( 7.1, 7.2 ) de démarcation dans une position de pénétration,
dans laquelle l'objet ( St ) se trouve entre les éléments ( 7.1, 7.2 ) de démarcation,
les deux éléments ( 7.1, 7.2 ) de démarcation s'appliquent à l'objet ( St ) et
on fait tourner de manière synchronisée autour du deuxième axe ( D2 ) de rotation les éléments ( 7.1, 7.2 ) de démarcation lors de la rotation du moyen ( 2, 7.1, 7.2, 9, 10.1, 10.2 ) de retenue.
